# EUROPEAN PATENT SPECIFICATION

(11) **EP 0 957 015 B1**
(45) Date of publication and mention of the grant of the patent: **23.07.2003**
(21) Application number: 99109521.7
(22) Date of filing: 12.05.1999
(51) Int. Cl.: B60R 25/02

(54) **Steering lock device for a vehicle steering assembly**
Lenkradschlossvorrrichtung für eine Fahrzeugslenkung
Verrou de direction pour un dispositif de direction d'un véhicule

(30) Priority: 12.05.1998 IT TO980396
(43) Date of publication of application: 17.11.1999
(73) Proprietor: TRW ITALIA S.P.A., 25063 Gardone Val Trompia (IT)
(72) Inventor: Graglia, Daniele, 10026 Santena (IT)
(74) Representative: Eccetto, Mauro

(56) References cited:
- DE-C- 19 522 508
- GB-A- 2 061 370
- US-A- 1 329 391
- US-A- 3 680 335
- US-A- 3 985 009

## Description

The present invention relates to a steering lock device for a vehicle steering assembly.

As is known, vehicle steering assemblies comprise a fixed tubular body, and a control shaft extending through the tubular body and rotated by the steering wheel of the vehicle about a respective axis with respect to the tubular body.

Each steering assembly has a steering lock device comprising a guide connected to the tubular body, and a sliding locking body, which slides along the guide in a direction crosswise to the control shaft, and is movable by an actuating assembly between a forward position angularly locking the shaft, and a withdrawn rest position enabling the shaft to rotate freely.

The actuating assembly of known steering lock devices comprises a sliding bolt, which is aligned with and connected directly to the sliding body on one side, and to an actuating cam on the other. The cam is carried by a drum of a key-operated lock, and may be axial or radial for respectively positioning the drum parallel or perpendicular to the traveling direction of the bolt.

Though widely used, known steering lock devices of the above type are less than satisfactory by imposing strict positions of the drum with respect to the guide of the sliding body. That is, in known devices, the angle between the drum or key rotation axis and the traveling direction of the sliding body may only assume two values : zero or ninety degrees, depending on the type of cam used. Such strict positioning of the lock drum with respect to the guide seriously hinders development, especially in terms of improved efficiency and look, of most of the components in the region of the steering lock device. GB 2 061 370 A discloses a steering lock device according to the preamble of Claim 1 in which a sliding body is sliding in a first direction between a lock position and a rest position under the action of actuating means comprising a bolt movable in a second direction perpendicular to said first direction, and cam motion transmission means interposed between the sliding body and the bolt.

In some cases, known steering lock devices of the above type are easily tampered with. In fact, currently used antitheft devices comprise plastic elements, which constitute weak points of the devices by being deactivated and put out of use relatively quickly and easily; whereas, in others, the sliding body may be released from the lock position by simply breaking certain parts of the lock device.

Finally, in many cases, known steering lock devices have a tendency to lock in the event of accidents resulting in partial or total breakage and/or deformation of the device, thus locking the steering wheel and preventing any directional control by the driver.

It is an object of the present invention to provide a steering lock device designed to eliminate the aforementioned drawbacks in a straightforward, low-cost manner.

According to the present invention, there is provided a steering lock device for a vehicle steering assembly, as defined in Claim 1.

A non-limiting embodiment of the invention will be described by way of example with reference to the accompanying drawings, in which:
Figure 1 shows a view in perspective of a preferred embodiment of the steering lock device according to the present invention, associated with a steering assembly shown only partly;
Figure 2 shows an enlarged view in perspective, with parts removed for clarity, of the Figure 1 steering lock device;
Figure 3 shows a smaller-scale, exploded view in perspective, with parts removed for clarity, of the Figure 2 device.

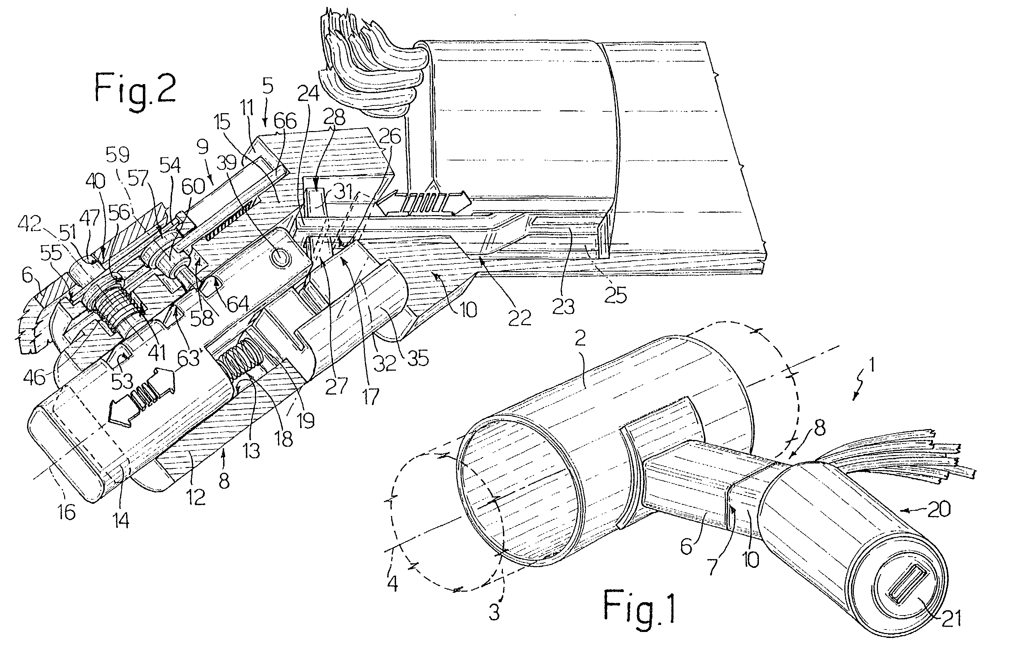

Number 1 in Figure 1 indicates as a whole a steering assembly (shown partly) comprising a fixed tubular body 2 with a lateral opening (not shown); and a control shaft 3 shown by the dash line. Shaft 3 has a respective axis 4, extends through tubular body 2, is connected to tubular body 2 so as to rotate about axis 4, and is fitted with the steering wheel (not shown) of the vehicle.

With reference to Figures 1 and 2, steering assembly 1 is provided with a steering lock device 5 comprising a tubular connecting body 6, which is connected integrally to body 2 to surround the lateral opening (not shown), projects outwards of body 2 in a direction perpendicular to axis 4, and is defined by a front surface 7.

Device 5 also comprises a supporting body 8 in turn comprising an elongated tubular first portion 9 housed in body 6, and a hollow second portion 10, which is integral with first portion 9, extends outwards of body 6, and is defined by an axial shoulder 11 resting against front surface 7.

First portion 9 comprises an end portion 12 adjacent to shaft 3 and defining a guide 13 for a sliding body 14; and an opposite portion 15 smaller in cross section than portion 12 so as to define, close to shoulder 11, a weakened portion most likely to be broken in the event of accident and/or tampering.

Body 14, preferably made of hardened steel, is moved, along guide 13 in a direction 16 perpendicular to axis 4 and by a key-operated actuating assembly 17, between a withdrawn rest position enabling shaft 3 to rotate freely with respect to body 2, and a forward lock position engaging a retaining seat (not shown) formed on shaft 3 and in which body 14 is held by a compression spring 18 interposed between body 14 and a fixed wall 19 inside portion 9.

As shown particularly in Figures 1 and 2, actuating assembly 17 comprises a known key-operated lock 20 having a respective drum 21; a known actuating cam (not shown) connected integrally to drum 21 in known manner; and a bolt 22. Bolt 22 comprises an end portion 23 connected to the cam in known manner; and an opposite end portion 24, which extends partly inside portion 10, and is movable in a direction 25 forming with direction 16 an angle of other than zero and preferably of about 35°.

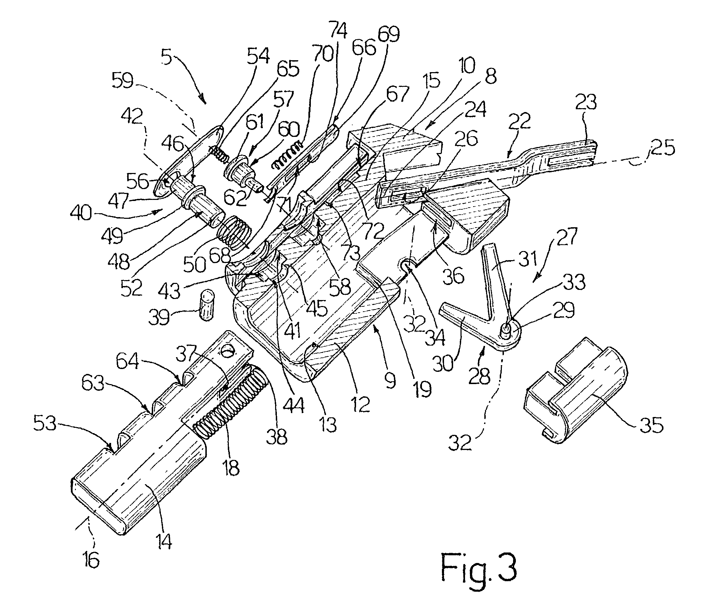

With reference to Figures 2 and 3, portion 24 comprises a slot 26 elongated in a direction parallel to direction 25, and is connected to body 14 by a lever transmission 27 comprising, in the example shown, a single substantially V-shaped rocker-arm lever 28 in turn comprising an intermediate portion 29 and two lateral arms 30 and 31. Intermediate portion 29 is hinged to portion 9, so as to rotate about an axis 32 perpendicular to directions 16 and 25, by means of two opposed pins 33 (only one shown in Figure 3), which are integral with intermediate portion 29, engage in rotary manner respective seats 34 (only one shown in Figure 3) formed in portion 9, between shoulder 11 and portion 12, and coaxial with axis 32, and are retained inside respective seats 34 by a caplike retaining body 35. Body 35 is made of soft material, preferably a light alloy known commercially as "ZAMAC®", engages a respective seat 36 defined by shoulder 11 on one side and by portion 12 on the other, and is locked inside seat 36 preferably by partial permanent deformation of portion 9.

Arm 31 extends loosely inside portion 10 and portion 15 and through slot 26 formed in end portion 24 of bolt 22; and arm 30 loosely engages a further slot 37 (Figure 3) defined by an axial groove 38 formed in body 14 and by a peg 39 extending through body 14 and parallel to axis 32.

Again with reference to Figures 2 and 3, steering lock device 5 also comprises a releasable connecting assembly 40 for retaining portion 9 of body 8 inside tubular body 6 and for retaining shoulder 11 against surface 7. Assembly 40 comprises a seat 41 formed in portion 9, and which has a respective axis 42 perpendicular to direction 16, and in turn comprises two cylindrical portions 43, 44 aligned with each other and coaxial with axis 42; portion 44 is smaller in diameter than portion 43, and is connected to portion 43 by an axial shoulder 45. Seat 41 houses in axially-sliding manner a pin 46 conveniently made of hardened steel and which comprises two cylindrical end portions 47, 48 and an intermediate outer flange 49 larger in diameter than portions 47 and 48. Portion 48 has an outside diameter approximately equal to but no larger than the inside diameter of portion 44 of seat 41, engages portion 44 in axially-sliding manner, and is surrounded by a spring 50 housed in portion 43 and compressed between flange 49 and shoulder 45 to keep pin 46 in an extracted position in which portion 47 engages a hole 51 (Figure 2) formed in tubular body 6 and coaxial with axis 42. Spring 50 is deformable elastically, in use, to enable an end portion 52 of portion 48 to positively engage a seat 53 in body 14, when body 14 is in the withdrawn position, and to enable full release of portion 47 from hole 51.

The action of spring 50 on pin 46 is counteracted by a retaining plate 54, which, as shown in particular in Figure 2, extends parallel to direction 16, is housed inside a cavity 55, is locked inside cavity 55 preferably by crimping portion 9, and has a through hole 56 through which portion 47 extends.

Again with reference to Figures 2 and 3, steering lock device 5 also comprises a stop assembly 57 for arresting sliding body 14 in both the forward and withdrawn positions, and which in turn comprises a seat 58 formed in portion 9, adjacent to seat 41, and having a respective axis 59 parallel to axis 42. Seat 58 is similar geometrically to seat 41, and is engaged by a pin 60, which forms part of assembly 57, extends coaxially with axis 59, engages seat 58 in axially-sliding manner, and comprises a flange 61 and and end portion 62 opposite flange 61. Portion 62 selectively engages two seats 63 and 64 formed in body 14, adjacent to seat 53 : in particular, seat 64 when body 14 is in the forward position, and seat 63 when body 14 is in the withdrawn position.

Pin 60 is pushed into a forward position engaging seat 63, 64 by a respective spring 65 (Figure 3) interposed between pin 60 and plate 54, and is maintained in a withdrawn position fully releasing seat 63, 64 by an elongated blade 66, which extends parallel to plate 54 and counteracts the action of spring 65. More specifically, blade 66 is housed in a cavity 67 formed on the outer periphery of portion 9 and partly defined by shoulder 11, and has a fork-shaped end portion 68 resting against flange 61, and an opposite end portion 69 which is forced against shoulder 11 by a further spring 70. Spring 70 is housed partially inside a longitudinal slot 71 in blade 66 and inside a corresponding seat 72 on portion 9, and is forced between an end surface 73 of seat 72, adjacent to pin 60, and an end surface 74 of slot 71, adjacent to shoulder 11.

To assemble the device, commencing with pin 46 maintained in the extracted position by spring 50, and with sliding body 14 in the withdrawn rest position so that seat 53 is positioned facing pin 46, portion 9 of supporting body 8 is inserted inside body 6, and pin 46 withdrawn so that end portion 52 engages seat 53. At this point, portion 9 is moved forward so that shoulder 11 rests against surface 7; in which position, hole 51, coaxial with axis 42, is engaged by portion 47, which is moved forward by spring 50 to lock bodies 6 and 8 in a fixed position with respect to each other.

In actual use, commencing with the condition shown in Figure 2, in which body 14 is in the forward lock position, the key may be turned to overcome the action of spring 18 and shift bolt 22 towards drum 21, so that lever 28 rotates about axis 32 to gradually move body 14 into the withdrawn rest position.

In the event of severe stress on body 8, as a result of collision or tampering, the weakened portion of body 8 yields so that portions 9 and 10 shift with respect to each other, thus eliminating the support defined by shoulder 11, so that blade 66 is withdrawn from pin 60 by spring 70, and pin 60 is moved by spring 65 towards body 14 so as to engage the facing seat 63, 64 and axially lock body 14 in the position assumed when stress was applied.

The construction characteristics of device 5, and in particular the presence of lever transmission 27, therefore enable sliding body 14 and drum 21 to be positioned in any way with respect to each other by simply selecting the angle between the traveling directions 16 and 25 of sliding body 14 and bolt 22. This greatly simplifies both design and development of the components surrounding the steering lock device, and in particular provides, as compared with known solutions, for a more efficient, more aesthetically pleasing configuration of the steering assembly and steering lock device as a whole.

Moreover, as compared with known solutions, the construction characteristics of assembly 57 as described provide for effectively withstanding tampering. That is, even in the event of the weakened portion of body 8 breaking, assembly 57 provides for immediately locking sliding body 14 axially, regardless of the axial position of body 14. What is more, providing sliding body 14 with a pin 46, and making the pin of hardened steel, defeat practically any attempt to dismantle supporting body 8 with body 14 in the forward position, by virtue of the forward movement of pin 46 being opposed by a steel body 14, and the resistance characteristics of pin 46 preventing the pin from being drilled out.

Device 5 as described is therefore extremely straightforward as regards construction and relatively fast to assemble, by virtue, substantially, of lever 28 engaging straightforward slots 37, 26 formed in body 14 and in bolt 22, and being connected in rotary manner to supporting body 8 by means of a straightforward retaining body 35 which may be inserted and locked from the outside.

Clearly, changes may be made to device 5 as described without, however, departing from the scope of the present invention. In particular, lever 28 may be formed differently from the one described, and may be connected both to bodies 8, 14 and to bolt 22 differently from the manner described by way of example. Moreover, lever 28 may be replaced by a different lever transmission or by a different transmission assembly. Finally, device 5 as described may have no stop assembly 57, and/or assembly 57 and connecting assembly 40 may be formed differently from those described.

## Claims

1. A steering lock device (5) for a vehicle steering assembly (1), the device (5) comprising a guide (8) connectable integrally to a fixed body (2) of the steering assembly (1); a sliding body (14) connected to the guide (8) so as to slide in a first direction (16); and key-operated actuating means (17) for moving said sliding body (14) between a forward lock position and a withdrawn rest position; the actuating means (17) comprising a bolt (22) movable in opposite senses in a second direction (25) forming with said first direction (16) an angle of other than zero; said actuating means (17) comprising motion transmission means (27) interposed between said sliding body (14) and said bolt (22) **characterized in that** said motion transmission means comprise a lever transmission (27).

2. A device as claimed in Claim 1, **characterized in that** said lever transmission (27) comprises a rocker-arm lever (28).

3. A device as claimed in Claim 2, **characterized in that** said lever transmission (27) comprises a single rocker-arm lever (28) comprising an intermediate portion (29) rotating about an axis (32) perpendicular to said first and said second direction (16) (25), a first end portion (31) positively connected to said bolt (22), and a second end portion (30) connected to said sliding body (14); hinge means (33, 34, 35) being provided to hinge said intermediate portion (29) to said guide (8).

4. A device as claimed in Claim 3, **characterized in that** said hinge means (33, 34, 35) comprise.at least one retaining seat (34) carried by said guide (8), and at least one pin (33) carried by said intermediate portion (29) and engaging said seat (34); retaining means (35) being provided to retain said pin (33) in said seat (34).

5. A device as claimed in Claim 4, **characterized in that** said retaining means comprise a caplike body (35) connected to said guide (8).

6. A device as claimed in any one of Claims 3 to 5, **characterized in that** said bolt (22) comprises a first slot (26), and said first end portion (31) engages said first slot (26) loosely.

7. A device as claimed in any one of Claims 3 to 6, **characterized in that** said sliding body (14) comprises a second slot (37), and said second end portion (30) engages said second slot (37) loosely.

8. A device as claimed in Claim 7, **characterized in that** said second slot (37) is partly defined by a peg (39) extending through said sliding body (14); said second end portion (30) resting against said peg (39).

9. A device as claimed in any one of the foregoing Claims, **characterized by** comprising lock means (57) associated with said guide (8) to axially lock said sliding body (14) with respect to said guide (8) in both said forward and withdrawn positions.

10. A device as claimed in Claim 9, **characterized in that** said lock means (57) comprise a pair of seats (63)(64) formed in said sliding body (14); a lock pin (60) connected to said guide (8) so as to slide to and from said sliding body (14), and positively and selectively engaging said seats (63)(64); and first elastic means (65) for pushing said lock pin (60) towards said sliding body (14); removable retaining means (66, 70) being provided to keep said lock pin (60) in a withdrawn position releasing said seats (63) (64).

11. A device as claimed in Claim 10, **characterized in that** said removable retaining means (66, 70) comprise a retaining body (66) inserted between said lock pin (60) and said guide (8) to keep the lock pin (60) in the withdrawn position; and second elastic means (70) interposed between the retaining body (66) and said guide (8) to force the retaining body (66) against a shoulder (11) of the guide (8).

12. A device as claimed in any one of the foregoing Claims, **characterized by** also comprising a tubular body (6) connectable integrally to said fixed body (2) and housing said guide (8); releasable connecting means (40) being interposed between said sliding body (14) and said tubular body (6).

13. A device as claimed in Claim 12, **characterized in that** said releasable connecting means (40) comprise at least one pin (46) connected to said guide (8) so as to slide to and from said sliding body (14); a first (53) and a second (51) seat formed respectively in said sliding body (14) and in said tubular body (6) and engaged selectively by said pin (46); and third elastic means (50) interposed between said guide (8) and said pin (46) to keep the pin (46) in said second seat (51).

## Patentansprüche

1. Lenkradschlossvorrichtung (5) für eine Fahrzeugslenkung (1), wobei die Vorrichtung (5) eine Führung (8), die an einen ortsfesten Körper (2) der Lenkung (1) angebaut werden kann, einen Gleitkörper (14), der mit der Führung (8) verbunden ist, um in eine erste Richtung (16) zu gleiten, und Tasten-Betätigungsmittel (17) zur Bewegung des Gleitkörpers (14) zwischen einer vorderen Verriegelungsstellung und einer zurückgezogenen Ruhestellung aufweist, wobei die Betätigungsmittel (17) einen Bolzen (22) aufweisen, der in einer zweiten Richtung (25), die mit der ersten Richtung (16) einen Winkel ungleich Null bildet, in Gegenrichtungen beweglich ist, wobei die Betätigungsmittel (17) Bewegungsübertragungsmittel (27) aufweisen, die zwischen dem Gleitkörper (14) und dem Bolzen (22) angeordnet sind, **dadurch gekennzeichnet, dass** die Bewegungsübertragungsmittel eine Hebelübersetzung (27) aufweisen.

2. Vorrichtung nach Anspruch 1, **dadurch gekennzeichnet, dass** die Hebelübersetzung (27) einen Kipparmhebel (28) aufweist.

3. Vorrichtung nach Anspruch 2, **dadurch gekennzeichnet, dass** die Hebelübersetzung (27) einen einzigen Kipparmhebel (28) aufweist, der einen Zwischenabschnitt (29), der um eine Achse (32) senkrecht zur ersten und zur zweiten Richtung (16) (25) dreht, einen ersten Endabschnitt (31), der formschlüssig mit dem Bolzen (22) verbunden ist, und einen zweiten Endabschnitt (30) aufweist, der mit dem Gleitkörper (14) verbunden ist, wobei Gelenkeinrichtungen (33, 34, 35) vorgesehen sind, um den Zwischenabschnitt (29) gelenkig mit der Führung (8) zu verbinden.

4. Vorrichtung nach Anspruch 3, **dadurch gekennzeichnet, dass** die Gelenkeinrichtungen (33, 34, 35) mindestens einen Haltesitz (34), der auf der Führung (8) sitzt, und mindestens einen Stift (33) aufweisen, der auf dem Zwischenabschnitt (29) sitzt und in den Sitz (34) eingreift, wobei Haltemittel (35) vorgesehen sind, um den Stift (33) im Sitz (34) zu halten.

5. Vorrichtung nach Anspruch 4, **dadurch gekennzeichnet, dass** die Haltemittel einen kappenähnlichen Körper (35) aufweisen, der mit der Führung (8) verbunden ist.

6. Vorrichtung nach einem der Ansprüche 3 bis 5, **dadurch gekennzeichnet, dass** der Bolzen (22) einen ersten Schlitz (26) aufweist, und dass der erste Endabschnitt (31) lose in den ersten Schlitz (26) eingreift.

7. Vorrichtung nach einem der Ansprüche 3 bis 5, **dadurch gekennzeichnet, dass** der Gleitkörper (14) einen zweiten Schlitz (37) aufweist, und dass der zweite Endabschnitt (30) lose in den zweiten Schlitz (37) eingreift.

8. Vorrichtung nach Anspruch 7, **dadurch gekennzeichnet, dass** der zweite Schlitz (37) teilweise durch einen Zapfen (39) definiert wird, der sich durch den Gleitkörper (14) erstreckt, wobei der zweite Endabschnitt (30) gegen den Zapfen (39) anliegt.

9. Vorrichtung nach einem der vorhergehenden Ansprüche, **dadurch gekennzeichnet, dass** sie Verriegelungsmittel (57) aufweist, die der Führung (8) zugeordnet sind, um den Gleitkörper (14) in bezug auf die Führung (8) sowohl in der vorderen als auch in der zurückgezogenen Stellung axial zu verriegeln.

10. Vorrichtung nach Anspruch 9, **dadurch gekennzeichnet, dass** die Verriegelungsmittel (57) ein Paar von Sitzen (63)(64), die im Gleitkörper (14) ausgebildet sind, einen Verriegelungsstift (60), der mit der Führung (8) verbunden ist, um zum Gleitkörper (14) hin und von ihm weg zu gleiten, und formschlüssig und selektiv in die Sitze (63)(64) eingreift, und erste elastische Mittel (65) aufweisen, um den Verriegelungsstift (60) zum Gleitkörper (14) zu drücken, wobei entfernbare Haltemittel (66, 70) vorgesehen sind, um den Verriegelungsstift (60) in einer zurückgezogenen Stellung zu halten, in der er die Sitze (63)(64) freigibt.

11. Vorrichtung nach Anspruch 10, **dadurch gekennzeichnet, dass** die entfernbaren Haltemittel (66, 70) einen Haltekörper (66), der zwischen den Verriegelungsstift (60) und die Führung (8) eingefügt ist, um den Verriegelungsstift (60) in der zurückgezogenen Stellung zu halten, und zweite elastische Mittel (70) aufweisen, die zwischen den Haltekörper (66) und die Führung (8) eingefügt sind, um den Haltekörper (66) gegen eine Schulter (11) der Führung (8) zu drücken.

12. Vortichtung nach einem der vorhergehenden Ansprüche, **dadurch gekennzeichnet, dass** sie auch einen rohrförmigen Körper (6) aufweist, der an den ortsfesten Körper (2) anbaubar ist und die Führung (8) aufnimmt, wobei lösbare Verbindungsmittel (40) zwischen den Gleitkörper (14) und den rohrförmigen Körper (6) eingefügt sind.

13. Vorrichtung nach Anspruch 12, **dadurch gekennzeichnet, dass** die lösbaren Verbindungsmittel (40) mindestens einen Stift (46), der mit der Führung (8) verbunden ist, um zum und vom Gleitkörper (14) weg zu gleiten, einen ersten (53) und einen zweiten Sitz (51), die je im Gleitkörper (14) bzw. im rohrförmigen Körper (6) ausgebildet sind und in die der Stift (46) selektiv eingreift, und dritte elastische Mittel (50) aufweisen, die zwischen die Führung (8) und den Stift (46) eingefügt sind, um den Stift (46) im zweiten Sitz (51) zu halten.

## Revendications

1. Verrou de direction (5) pour un dispositif de direction de véhicule (1), le verrou (5) comprenant un guide (8) pouvant être connecté de manière intégrée à un corps fixe (2) du dispositif de direction (1) ; un corps coulissant (14) connecté au guide (8) de manière à coulisser dans une première direction (16) ; et des moyens de commande actionnés par clé (17) destinés à déplacer ledit corps coulissant (14) entre une position avant de verrouillage et une position de repos et de retrait ; les moyens de commande (17) comprenant un pêne (22) mobile dans des sens opposés dans une seconde direction (25) formant avec ladite première direction (16) un angle autre que zéro degré ; lesdits moyens de commande (17) comprenant des moyens de transmission de mouvement (27) disposés entre ledit corps coulissant (14) et ledit pêne (22),
**caractérisé en ce que** lesdits moyens de transmission de mouvement comprennent une transmission à levier (27).

2. Verrou selon la revendication 1, **caractérisé en ce que** ladite transmission à levier (27) comprend un levier à bascule (28).

3. Verrou selon la revendication 2, **caractérisé en ce que** ladite transmission à levier (27) comprend un levier à bascule unique (28) comprenant une partie intermédiaire (29) en rotation autour d'un axe (32) perpendiculaire à ladite première et à ladite seconde direction (16), (25), une première partie d'extrémité (31) connectée de manière positive au dit pêne (22), et une seconde partie d'extrémité (30) connectée au dit corps coulissant (14) ; des moyens d'articulation (33, 34, 35) étant fournis pour articuler ladite partie intermédiaire (29) sur ledit guide (8).

4. Verrou selon la revendication 3, **caractérisé en ce que** lesdits moyens d'articulation (33, 34, 35) comprennent au moins un siège de retenue (34) supporté par ledit guide (8), et au moins un axe (33) supporté par ladite partie intermédiaire (29) et en engagement avec ledit siège (34) ; des moyens de retenue (35) étant fournis pour retenir ledit axe (33) dans ledit siège (34).

5. Verrou selon la revendication 4, **caractérisé en ce que** lesdits moyens de retenue comprennent un corps en forme de capuchon (35) connecté au dit guide (8).

6. Verrou selon l'une quelconque des revendications 3 à 5, **caractérisé en ce que** ledit pêne (22) comprend une première fente (26), et **en ce que** ladite première partie d'extrémité (31) s'engage de manière lâche avec ladite première fente (26).

7. Verrou selon l'une quelconque des revendications 3 à 6, **caractérisé en ce que** ledit corps coulissant (14) comprend une seconde fente (37), et **en ce que** ladite seconde partie d'extrémité (30) s'engage de manière lâche avec ladite seconde fente (37).

8. Verrou selon la revendication 7, **caractérisé en ce que** ladite seconde fente (37) est en partie définie par une cheville (39) s'étendant au travers dudit corps coulissant (14) ; et **en ce que** ladite seconde partie d'extrémité (30) repose contre ladite cheville (39).

9. Verrou selon l'une quelconque des revendications précédentes, **caractérisé en ce qu'**il comprend des moyens de verrouillage (57) associés au dit guide (8), afin de verrouiller de manière axiale ledit corps coulissant (14) par rapport au dit guide (8) dans lesdites deux positions avant et de retrait.

10. Verrou selon la revendication 9, **caractérisé en ce que** lesdits moyens de verrouillage (57) comprennent une paire de sièges (63), (64), formés dans ledit corps coulissant (14) ; un axe de verrouillage (60) connecté au dit guide (8) de manière à coulisser vers et en arrière dudit corps coulissant (14), et en engagement positif et sélectif avec lesdits deux sièges (63), (64) ; et des premiers moyens élastiques (65) destinés à pousser ledit axe de verrouillage (60) vers ledit corps coulissant (14) ; des moyens de retenue amovibles (66, 70) étant fournis pour maintenir ledit axe de verrouillage (60) dans une position de retrait libérant lesdits sièges (63), (64).

11. Verrou selon la revendication 10, **caractérisé en ce que** lesdits moyens de retenue amovibles (66, 70) comprennent un corps de retenue (66) introduit entre ledit axe de verrouillage (60) et ledit guide (8), afin de maintenir l'axe de verrouillage dans la position de retrait ; et **en ce que** des seconds moyens élastiques (70) ont disposés entre le corps de retenue (66) et ledit guide (8), afin de pousser le corps de retenue (66) contre un épaulement (11) du guide (8).

12. Verrou selon l'une quelconque des revendications précédentes, **caractérisé en ce qu'**il comprend également un corps tubulaire (6) pouvant être connecté de manière intégrée au dit corps fixe (2) et qu'il loge ledit guide (8) ; des moyens de connexion amovibles (40) étant disposés entre ledit corps coulissant (14) et ledit corps tubulaire (6).

13. Verrou selon la revendication 12, **caractérisé en ce que** lesdits moyens de connexion amovibles (40) comprennent au moins un axe (46) connecté au dit guide (8) de manière à coulisser vers et en arrière dudit corps coulissant (14) ; un premier siège (53) et un second siège (51) étant respectivement formés dans ledit corps coulissant (14) et dans ledit corps tubulaire (6) et en engagement sélectif par ledit axe (46) ; et des troisièmes moyens élastiques (50) étant disposés entre ledit guide (8) et ledit axe (46) afin de maintenir l'axe (46) dans ledit second siège (51).
